# EUROPÄISCHE PATENTSCHRIFT

(11) **EP 1 138 534 B1**
(45) Veröffentlichungstag und Bekanntmachung des Hinweises auf die Patenterteilung: **10.12.2008**
(21) Anmeldenummer: 01250093.0
(22) Anmeldetag: 15.03.2001
(51) Int. Cl.: B60H 1/34

(54) **Luftströmungsbeeinflussungseinrichtung**
Air flow control unit
Unité de commande du flux d'air

(30) Priorität: 25.03.2000 DE 10014975
(43) Veröffentlichungstag der Anmeldung: 04.10.2001
(73) Patentinhaber: Volkswagen AG, 38436 Wolfsburg (DE)
(72) Erfinder: Gabbert, Heiko, 49377 Vechta (DE); Torsten, Gruss, 38104 Braunschweig (DE); Michbronn, Erich, 38110 Braunschweig (DE)

(56) Entgegenhaltungen:
- EP-A- 0 457 063
- EP-A- 0 949 099
- DE-C- 19 748 998

## Beschreibung

Die Erfindung bezieht sich auf eine Luftströmungsbeeinflussungseinrichtung, insbesondere zur Verwendung bei Kraftfahrzeugen, mit einem in einem drehbar in einer Ausnehmung eines Gehäuses der Luftströmungsbeeinflussungseinrichtung gelagerten Gehäuse befindlichen Luftausströmer mit Funktionselementen, umfassend wenigstens ein Luftleitelement, wenigstens ein den Luftstrom zumindest teilweise unterbindendes oder umleitendes Verschlußteil mit einem Bedienelement zur Verstellung des Verschlußteiles, wobei das Verschlußteil als verdrehbares, blendenförmiges Teil ausgebildet ist, und mit zur Verstellbarkeit des Verschlußteiles bewegbaren Führungsmitteln.

Aus dem Stand der Technik sind verschiedene Ausführungsformen von Luftströmungsbeeinflussungseinrichtungen bekannt. So ist z. B. aus der gattungsbildenden DE 196 15 223 A1 eine Luftströmungsbeeinflussungseinrichtung bekannt, und zwar für ein in einem Gehäuse angeordnetes Belüftungssystem mit Funktionselementen wie Luftleitelementen, horizontal und vertikal, einem den Luftstrom unterbindenden oder umleitenden Verschlußteil und einem Bedienelement zur Verstellung des Verschlußteiles. Dabei ist das Verschlußteil als ein verdrehbares Plattenteil mit daran angeformten Stirnwandteilen ausgebildet, deren Außenkontur jeweils polygonartig ausgeführt ist. Das als verdrehbares Plattenteil ausgebildete Verschlußteil ist über eine an dem Randbereich des Plattenteiles befindliche Griffleiste in eine Offenstellung und in eine Schließstellung überführbar, wobei die jeweilige Stellung durch einen mit der Griffleiste jeweils zusammenwirkenden Anschlag an einem Düsengehäuse festgelegt ist. Diese Anordnung weist an sich den Vorteil auf, daß ein vollständiges Verschließen der Blende möglich ist, ohne daß in verschlossenem Zustand noch Verstellelemente von außen sichtbar sind, und störend bzw. verschmutzungsanfällig hervorstehen, noch durch die Drehbewegung Teile des Gehäuses des Belüftungssystems aus der Kontur hervorstehen. Nachteilig ist bei dieser Ausführungsform einer Luftströmungsbeeinflussungseinrichtung der recht hohe konstruktive Aufwand insbesondere der Führungsmittel für die Verstellbarkeit des Plattenkörpers sowie die unkomfortable und umständliche Handhabbarkeit bei der Bewegung des Verschließteiles in die Offen- bzw. Schließstellung.

Der Erfindung liegt die Aufgabe zugrunde, die bekannte Luftströmungsbeeinflussungseinrichtung unter Beibehaltung der bisherigen Vorteile in der Weise zu verbessern, daß sie einfach und wirtschaftlich herstellbar ist sowie eine bessere Handhabbarkeit und einen besseren Komfort aufweist. Dabei sollen bei geschlossenem Luftausströmer keine Funktionselemente von außen sichtbar sein.

Diese Aufgabe wird erfindungsgemäß durch die kennzeichnenden Merkmale des Anspruchs 1 gelöst.

Eine vorteilhafte Ausgestaltung der Erfindung besteht darin, daß die Führungsmittel zum selbsttätigen Öffnen/Schließen des blendenförmigen Verschlußteiles aus einem mit einem als Verstellrad ausgebildeten Bedienelement zur Verstellung des Verschlußelementes auf einer Drehachse zusammenwirkenden ersten Zahnsegment bestehen, und aus einem mit dem ersten Zahnsegment in Eingriff stehenden zweiten Zahnsegment, das mit dem ersten Zahnsegment mit einer Schenkelfeder in Wirkverbindung steht, derart, daß sich die Schenkelfeder zu jeder Seite des Eingriffsscheitelpunktes hin entspannt. Auf diese Weise wird erstmalig mit einfachen Mitteln die Möglichkeit geschaffen, daß sich das Verschlußteil nach einer Anfangsdrehung des Verstellrades selbsttätig in seine Offen- bzw. Schließstellung weiterbewegt. Es wird also das Verschlußteil für den Luftausströmer, z.B. eine Holzblende, nach einer Anfangsbetätigung des Verstellrades automatisch in seine jeweilige Endposition, d.h. Offen- bzw. Schließstellung, weiterbewegt, wodurch die Handhabbarkeit und der Komfort dieser Vorrichtung wesentlich erhöht werden. So wird insbesondere eine Drehung des Gehäuses nur durch Betätigung eines Verstellrades erfolgen und nicht z.B. durch eine Berührung der Luftleitelemente des Luftausströmers oder des Verschlußteiles.

Zweckmäßigerweise wird vorgeschlagen, daß eine hintere Luftstromklappe und Mittel zur Regulierung derselben vorgesehen sind, und daß die Mittel zur Regulierung der hinteren Luftstromklappe durch eine am Gehäuse drehbar gelagerte, in einer an dem Verstellrad befindlichen Führungsbahn ablaufende, mit der hinteren Luftstromklappe in Wirkverbindung stehende Hebeleinrichtung gebildet sind. Die hintere Luftstromklappe kann somit gleichzeitig mit dem Öffnen bzw. Schließen des Luftausströmers reguliert werden. Hierdurch werden die Handhabbarkeit und der Komfort der Luftströmungsbeeinflussungseinrichtung weiter erhöht. Insbesondere wird dadurch vermieden, daß es bei geschlossenem Luftausströmer hinter diesem zu Turbulenzen oder ähnlichem in dem Gehäuse der Luftströmungsbeeinflussungseinrichtung kommen kann.

Bei einer bevorzugten Ausführungsform der vorliegenden Erfindung wirkt das zweite Zahnsegment mit seinem nicht mit dem ersten Zahnsegment im Eingriff stehenden Zahnbereich mit einer als Zahnrad ausgebildeten Bremse zusammen. Dadurch wird erreicht, daß die Kraft der Entspannung der Schenkelfeder zu jeder Seite hin abgedämpft wird, d.h. der Luftausströmer wird mit einer leicht abgebremsten Bewegung in seine erste oder zweite Endposition (Offen- bzw. Schließstellung) überführt. Die mit dem zweiten Zahnsegment zusammenwirkende Bremse ist dabei bevorzugt als Silikonbremse ausgebildet.

Nach einem weiteren Merkmal der vorliegenden Erfindung weist das Verstellrad einen ersten Anschlag für die Festlegung des Öffnungszustandes des Luftausströmers und einen zweiten Anschlag für die Festlegung der Schließstellung des Luftausströmers auf. Auf diese Weise wird die durch den Entspannungsvorgang der Schenkelfeder hervorgerufene Bewegung in die eine oder andere Richtung mit konstruktiv einfachen Mitteln begrenzt.

Nach einem weiteren Vorschlag der vorliegenden Erfindung ist die an dem Verstellrad befindliche Führungsbahn für die Hebeleinrichtung im wesentlichen viertelkreisförmig ausgebildet. Es ergibt sich dadurch ein vorteilhafter Ablaufvorgang der Hebeleinrichtung für die hintere Luftstromklappe in der Führungsbahn des Verstellrades.

Zweckmäßig ist es, daß an der Verbindungsstelle zwischen Gehäuse der Luftströmungsbeeinflussungseinrichtung und Verschlußteil an wenigstens einem dieser beiden Teile ein Dichtelement vorgesehen ist, das in der Schließstellung des Luftausströmers von dem Verschlußteil beaufschlagbar ist.

Nach einem weiteren Merkmal der vorliegenden Erfindung ist dem in dem Gehäuse befindlichen Luftausströmer ein Stellantrieb zugeordnet. Dieser Stellantrieb ist zweckmäßig elektromotorisch betrieben ausgebildet.

Bei einer anderen Ausführungsform ist der Stellantrieb luftstrombetätigt ausgebildet.

Bei einer dritten Ausführungsform ist der Stellantrieb als pneumatischer Stellmotor ausgebildet.

Nach einem weiteren Merkmal der vorliegenden Erfindung sind die Luftleitelemente zur horizontalen und vertikalen Umlenkung des Luftstromes ausgebildet. Dadurch werden sehr gute Verstellmöglichkeiten des Luftausströmers z. B. in einem Kraftfahrzeug zur Verfügung gestellt.

Zweckmäßig ist es, daß zur Übertragung der Drehbewegung auf das Gehäuse am zweiten Zahnsegment ein Mitnehmer zum Eingriff in eine an dem Gehäuse ausgebildete Führungsbahn ausgebildet ist.

Bei einer anderen Ausführungsform ist nach einem letzten Vorschlag der vorliegenden Erfindung zur Übertragung der Drehbewegung auf das Gehäuse am zweiten Zahnsegment ein weiteres Zahnsegment zum Eingriff mit einem auf der Drehachse des Gehäuses angeordneten weiteren Zahnsegment angeordnet.

Die Erfindung ist in den Figuren der Zeichnung in mehreren Ausführungsbeispielen dargestellt. Es zeigen:
- Figur 1: die erfindungsgemäße Luftströmungsbeeinflussungseinrichtung in einer schematischen Darstellung in perspektivischer Ansicht, in einer ersten Funktionsstellung,
- Figur 2: die Führungsmittel für die Verstellbarkeit des Verschlußteiles der erfindungsgemäßen Einrichtung in der Funktionsstellung gemäß Figur 1,
- Figur 3: eine perspektivische Ansicht der erfindungsgemäßen Einrichtung in einer zweiten Funktionsstellung,
- Figur 4: die Führungsmittel für die Verstellbarkeit des Verschlußteiles der erfindungsgemäßen Einrichtung in der zweiten Funktionsstellung,
- Figur 5: eine schematische Ansicht der erfindungsgemäßen Einrichtung mit geschlossenem Verschlußteil,
- Figur 6: die Führungsmittel der erfindungsgemäßen Einrichtung in der Funktionsstellung gemäß der Figur 5,
- Figur 7: die erfindungsgemäße Einrichtung in einer schematischen Querschnittsdarstellung,
- Figur 8: eine schematische, weggebrochene Draufsicht auf die erfindungsgemäße Luftströmungsbeeinflussungseinrichtung.
- Figur 9: eine perspektivische Ansicht einer abgewandelten Ausführungsform der erfindungsgemäßen Einrichtung,
- Figur 10: eine Oberansicht der abgewandelten Ausführungsform der erfindungsgemäßen Einrichtung nach Fig. 9.

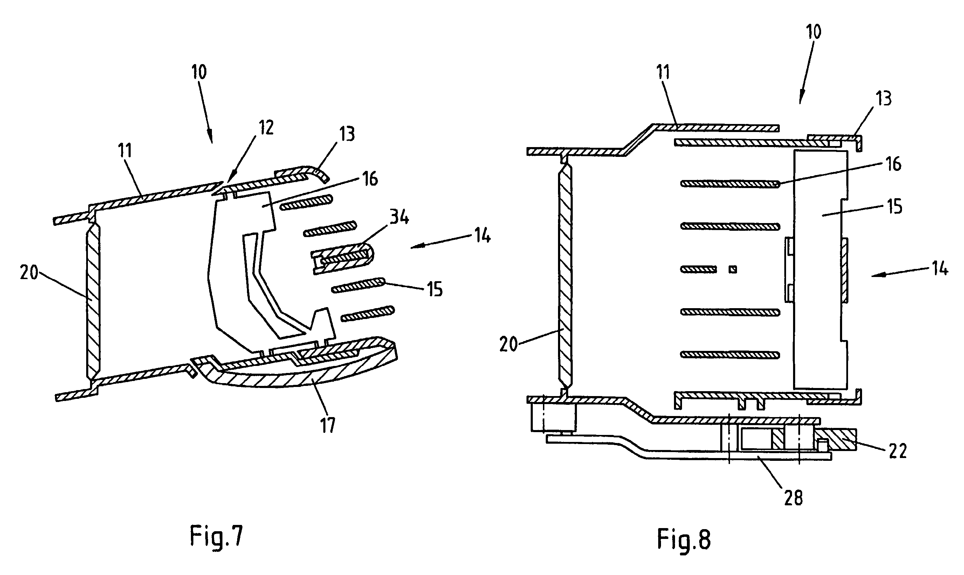

Die erfindungsgemäße Luftströmungsbeeinflussungseinrichtung ist generell mit 10 bezeichnet. Sie dient insbesondere zur Verwendung bei Kraftfahrzeugen, und ist mit einem in einem Gehäuse 13 befindlichen Luftausströmer 14 versehen, wobei das Gehäuse 13 drehbar in einer Ausnehmung 12 eines Gehäuses 11 der erfindungsgemäßen Luftströmungsbeeinflussungseinrichtung 10 gelagert ist. Die Funktionselemente des Luftausströmers 14 umfassen vorliegend Luftleitelemente 15, 16, die, siehe z. B. die Figur 8 der Zeichnung, zur horizontalen und vertikalen Umlenkung des Luftstromes ausgebildet sind, sowie ein den Luftstrom unterbindenden oder umleitenden Verschlußteil 17 mit einem Bedienelement 18 zur Verstellung des Verschlußteiles 17. Das Verschlußteil 17 ist als verdrehbares, blendenförmiges Teil ausgebildet. Die Luftströmungsbeeinflussungseinrichtung 10 ist mit bewegbaren Führungsmitteln 19 zur Verstellbarkeit des Verschlußteiles 17 versehen, und mit einer hinteren Luftstromklappe 20 und Mitteln 21 zur Regulierung derselben.

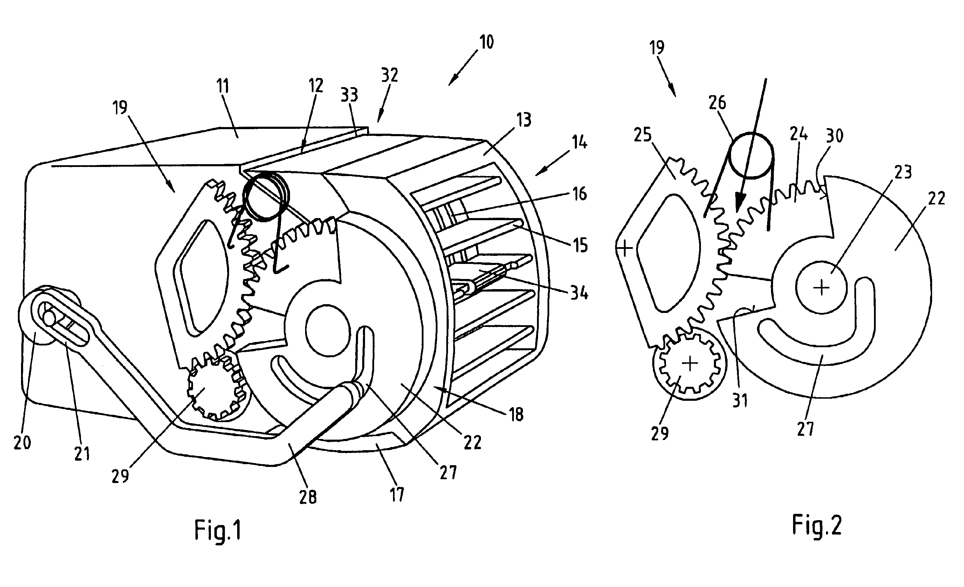

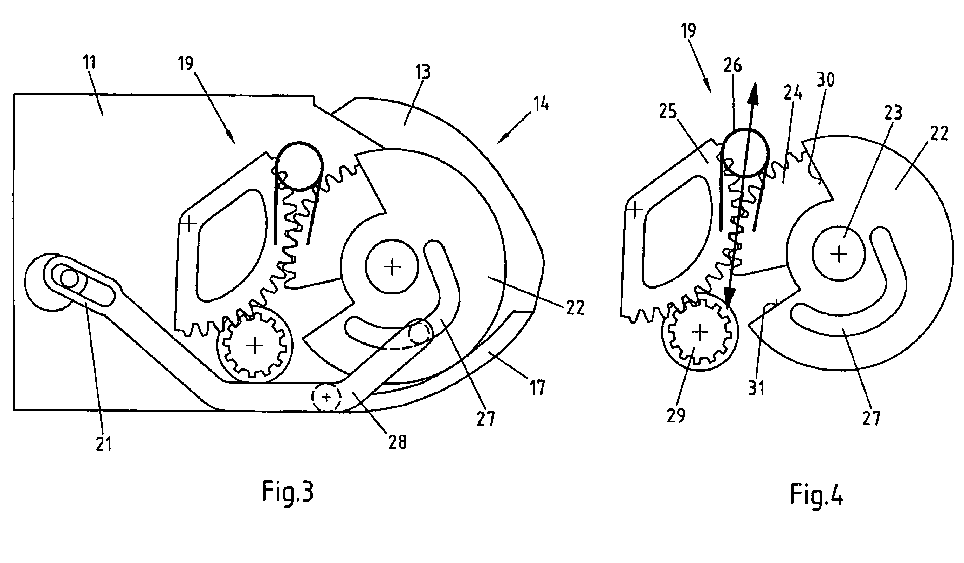

Die Führungsmittel 19 der erfindungsgemäßen Einrichtung 10 bestehen zum selbsttätigen Öffnen/Schließen des blendenförmigen Verschlußteiles 17, siehe z. B. die Figuren 1 und 2 der Zeichnung, aus einem ersten Zahnsegment 24, das mit einen Verstellrad 22 auf einer Drehachse 23 zusammenwirkt, wobei das Bedienelement 18 zur Verstellung des Verschlußelementes 17 eben als Verstellrad 22 ausgebildet ist. Die Führungsmittel 19 der erfindungsgemäßen Einrichtung 10 bestehen außerdem aus einem mit dem ersten Zahnsegment 24 in Eingriff stehenden zweiten Zahnsegment 25, das mit dem ersten Zahnsegment 24 über eine Schenkelfeder 26 in Wirkverbindung steht. Dies geschieht in der Weise, daß sich die Schenkelfeder 26 zu jeder Seite des Eingriffsscheitelpunktes hin entspannt, siehe z. B. den in der Figur 4 der Zeichnung dargestellten Zustand der Führungsmittel 19 für das Verschlußteil 17. Die Mittel 21 zur Regulierung der hinteren Luftstromklappe 20 sind durch eine am Gehäuse 11 der Luftströmungsbeeinflussungseinrichtung 10 drehbar gelagerte, in einer an dem Verstellrad 22 befindlichen Führungsbahn 27 ablaufende, mit der hinteren Luftstromklappe 20 in Wirkverbindung stehende Hebeleinrichtung 28 gebildet.

Das zweite Zahnsegment 25 wirkt mit seinem nicht mit dem ersten Zahnsegment 24 in Eingriff stehenden Zahnbereich mit einer als Zahnrad ausgebildeten Bremse 29 zusammen. Diese mit dem zweiten Zahnsegment 25 zusammenwirkende Bremse 29 kann dabei vorteilhaft als Silikonbremse ausgebildet sein.

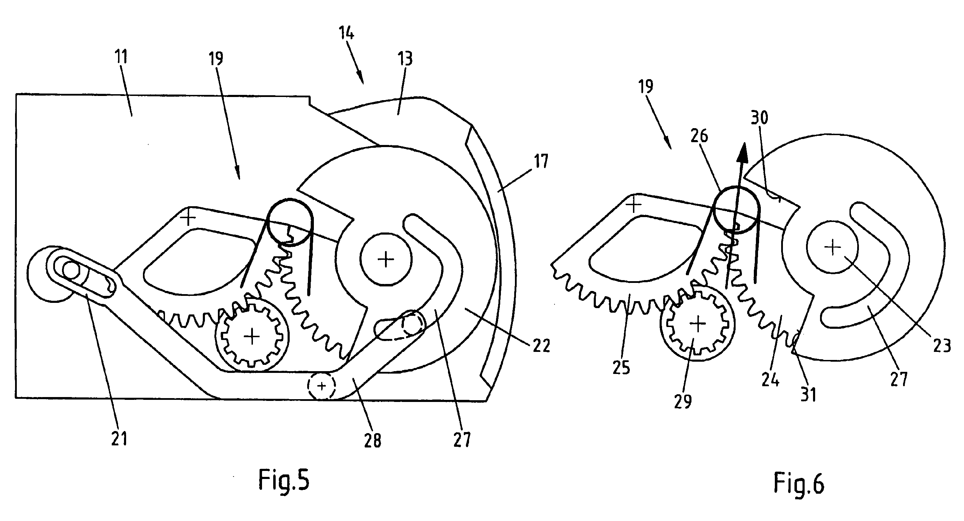

Das Verstellrad 22 weist, siehe z. B. die Figur 2 der Zeichnung, einen ersten Anschlag 30 für die Festlegung des Öffnungszustandes des Luftausströmers 14 auf, sowie einen zweiten Anschlag 31 für die Festlegung der Schließstellung des Luftausströmers 14, siehe die Figur 6 der Zeichnung. Die an dem Verstellrad 22 befindliche Führungsbahn 27 für die Hebeleinrichtung 28 ist im wesentlichen viertelkreisförmig ausgebildet.

An der Verbindungsstelle 32 zwischen Gehäuse 11 der Luftströmungsbeeinflussungseinrichtung 10 und Verschlußteil 17 ist, siehe die Figur 5 der Zeichnung, an dem Gehäuse 11 ein Dichtelement 33 vorgesehen, das in der Schließstellung des Luftausströmers 14 von dem Verschlußteil 17 beaufschlagbar ist.

Bei der erfindungsgemäßen Luftströmungsbeeinflussungseinrichtung 10 ist vorgesehen, daß dem in dem Gehäuse 13 befindlichen Luftausströmer 14 ein Stellantrieb zugeordnet ist. Dieser Stellantrieb, der in den Figuren der Zeichnung nicht dargestellt ist, kann elektromotorisch betrieben ausgebildet sein, der Stellantrieb kann luftstrombetätigt ausgebildet sein oder der Stellantrieb kann als pneumatischer Stellmotor ausgebildet sein.

Das Gehäuse 11 der Luftströmungsbeeinflussungseinrichtung 10 kann in die Instrumententafel einsetzbar ausgebildet sein, ein Bestandteil von der Instrumententafel sein oder das Gehäuse 11 mit dem eingesetzten Luftausströmer 14 mit Gehäuse 13 kann einen vormontierbaren Einbausatz bilden.

Die Oberfläche des Verschlußteiles 17, wie z. B. Holzblende, kann an die Oberflächengestalt des Gehäuses oder an die Oberflächengestalt der Instrumententafel angepaßt sein.

Die Luftleitelemente 15, 16 für die horizontale und vertikale Umlenkung des Luftstromes können mit bekannten Führungs- und Haltemitteln in dem Gehäuse 13 in dem Luftausströmer 14 angeordnet sein, und die Luftleitelemente 15, 16 weisen eine Verstelleinrichtung 34 zur Regulierung der horizontalen und vertikalen Umlenkung des Luftstromes auf.

Zur Übertragung der Drehbewegung auf das Gehäuse 13 ist bei dem in den Fig. 1 bis 8 dargestellten Ausführungsbeispiel am zweiten Zahnsegment 25 ein nicht dargestellter Mitnehmer zum Eingriff in eine an dem Gehäuse 13 ausgebildete Führungsbahn ausgebildet. Das Verstellrad 22 wird also das erste Zahnsegment 24 bewegen, welches dann das zweite Zahnsegment 25 bewegt, wobei die Schenkelfeder 26 gleichzeitig gespannt wird. Durch die Drehung des zweiten Zahnsegmentes 25 wird über den Mitnehmer das Gehäuse 13 gedreht. Beim Entspannen der Schenkelfeder 26 erfolgt das komplette Drehen des zweiten Zahnsegmentes 25 und somit von dessen Mitnehmer und des Gehäuses 13. Das Gehäuse 13 wird dabei so in seinem geöffneten und geschlossenen Zustand fixiert, daß ein Drehen des Gehäuses 13 nur durch Betätigung des Verstellrades 22 erfolgen kann und nicht z. B. durch eine Berührung der Luftleitelemente 15, 16 des Luftausströmers 14 oder des Verschlußteiles 17.

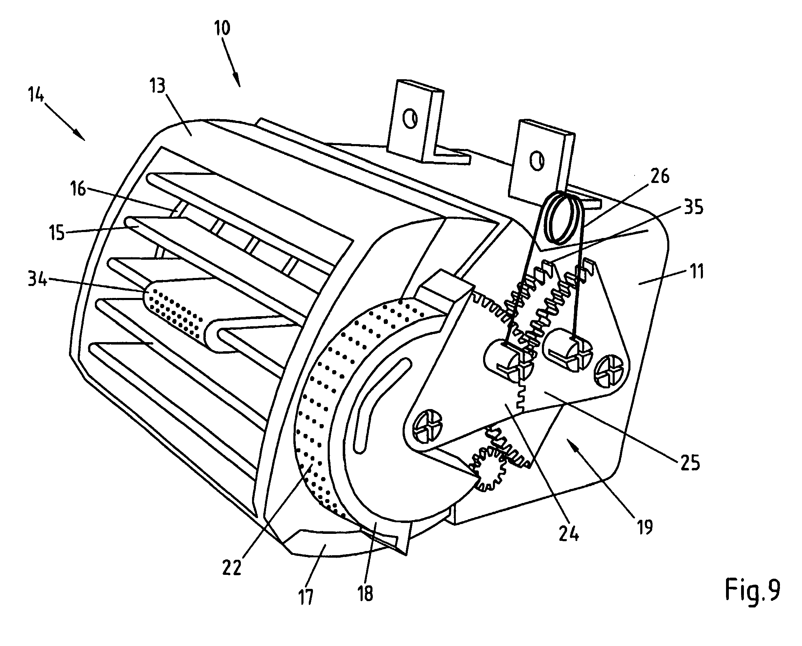

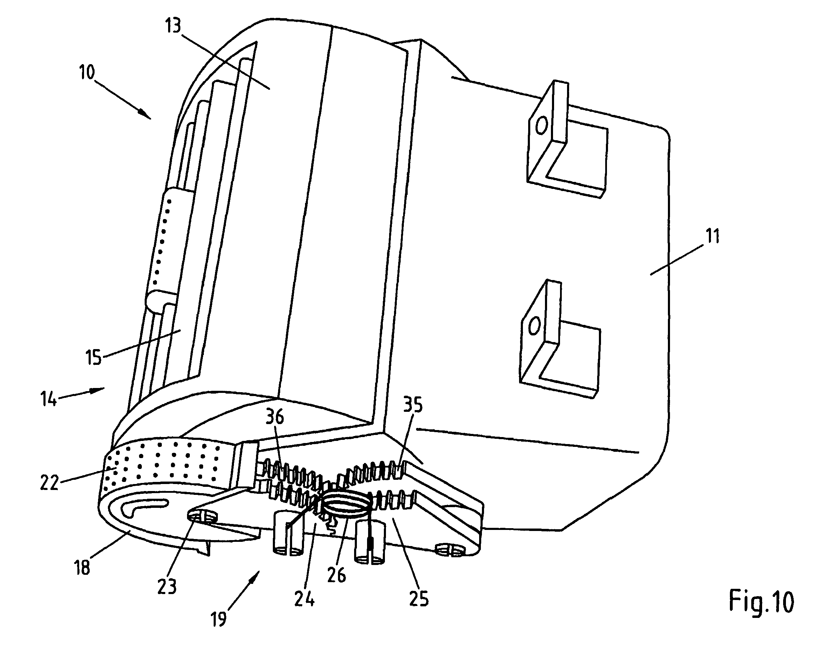

Alternativ dazu ist bei dem in den Fig. 9 und 10 dargestellten Ausführungsbeispiel zur Übertragung der Drehbewegung auf das Gehäuse 13 am zweiten Zahnsegment 25 ein weiteres Zahnsegment 35 zum Eingriff mit einem auf der Drehachse des Gehäuses 13 angeordneten weiteren Zahnsegment 36 angeordnet, siehe insbesondere die Fig. 10 der Zeichnung. Das zweite Zahnsegment 25 besitzt also ein weiteres Zahnsegment 35, das die Drehbewegung zu einem auf der Drehachse des Gehäuses 13 angeordneten weiteren Zahnsegment 36 übersetzt. Das Verstellrad 22 bewegt also wieder das erste Zahnsegment 24, dies das zweite Zahnrad 25, wodurch die Schenkelfeder 26 gespannt wird. Diese Schenkelfeder 26 steht bei dem Ausführungsbeispiel nach Fig. 9 und 10 über nicht näher bezeichnete zusätzliche Zapfen mit dem ersten 24 und zweiten Zahnsegment 25 in Wirkverbindung. Beim Entspannen der Schenkelfeder 26 wird das zweite Zahnsegment 25 komplett gedreht und über dessen weiteres Zahnsegment 35 das Zahnsegment 36 und somit das Gehäuse 13. Das Gehäuse 13 ist dabei wieder in seinem geöffneten und geschlossenen Zustand so fixiert, daß ein Drehen des Gehäuses 13 nur durch Betätigung des Verstellrades 22 möglich ist und nicht z. B. durch Berührung der Luftleitelemente 15, 16 des Luftausströmers 14 oder des Verschlußteiles 17.

Mit der erfindungsgemäßen Luftströmungsbeeinflussungseinrichtung 10 ist es möglich, daß nach einer Anfangsdrehung des Verstellrades 22 das Verschlußteil 17 selbsttätig in seine Offen- bzw. Schließstellung überführt wird, wobei gleichzeitig über die Hebeleinrichtung 28 ein Regulieren der hinteren Luftstromklappe 20 ermöglicht wird. Eine versehentliche Änderung der Offen- bzw. Schließstellung durch Berühren der Luftleitelemente 15, 16 des Luftausströmers 14 oder des Verschlußteiles 17 ist nicht möglich. Dabei sind in der Schließstellung von außen keine Funktionselemente des Luftausströmers 14 sichtbar. Das Verschlußteil 17, wie z. B. Holz- oder Designblende, kann in seinem Design beliebig variiert werden.

Wie bereits erwähnt, sind die dargestellten Ausführungsformen nur beispielsweise Verwirklichungen der Erfindung, diese ist nicht darauf beschränkt, es sind vielmehr noch mancherlei Abänderungen und Ausbildungen möglich. So kann insbesondere der Luftausströmer 14 eine von den Figuren der Zeichnungen abweichende Ausgestaltung aufweisen, weiterhin möglich ist eine Variation in der Anordnung der Führungsmittel für die Verstellung des Verschlußteiles 17.

### BEZUGSZEICHENLISTE

- 10: Luftströmungsbeeinflussungseinrichtung
- 11: Gehäuse (von 10)
- 12: Ausnehmung (von 11)
- 13: Gehäuse (von 14)
- 14: Luftausströmer
- 15: Luftelement (horizontal)
- 16: Luftelement (vertikal)
- 17: Verschlußelement
- 18: Bedienelement
- 19: Führungsmittel (zur Verstellung von 17)
- 20: hintere Luftstromklappe
- 21: Mittel zur Regulierung (von 20)
- 22: Verstellrad
- 23: Drehachse (von 22, 24)
- 24: erstes Zahnsegment
- 25: zweites Zahnsegment
- 26: Schenkelfeder
- 27: Führungsbahn (an 22 für 28)
- 28: Hebeleinrichtung
- 29: Bremse
- 30: erster Anschlag (von 22)
- 31: zweiter Anschlag (von 22)
- 32: Verbindungsstelle (zwischen 11 und 17)
- 33: Dichtelement
- 34: Handhabe (von 15, 16)
- 35: weiteres Zahnsegment (von 25)
- 36: weiteres Zahnsegment (an 13)

## Patentansprüche

1. Luftströmungsbeeinflussungseinrichtung (10), insbesondere zur Verwendung bei Kraftfahrzeugen, mit einem in einem drehbar in einer Ausnehmung (12) eines Gehäuses (11) der Luftströmungsbeeinflussungseinrichtung (10) gelagerten Gehäuse (13) befindlichen Luftausströmer (14) mit Funktionselementen, umfassend wenigstens ein Luftleitelement (15, 16), wenigstens ein den Luftstrom zumindest teilweise unterbindendes oder umleitendes Verschlußteil (17) mit einem Bedienelement (18) zur Verstellung des Verschlußteiles (17), wobei das Verschlußteil (17) als verdrehbares, blendenförmiges Teil ausgebildet ist, mit zur Verstellbarkeit des Verschlußteiles (17) bewegbaren Führungsmitteln (19), **dadurch gekennzeichnet,**
**daß** die Führungsmittel (19) zum selbsttätigen Öffnen oder Schließen des blendenförmigen Verschlußteiles (17) ausgebildet sind, derart, daß das Verschlußteil (17) nach einer initierten Anfangsbewegung automatisch in seine jeweilige Endposition, das heißt Offenstellung beziehungsweise Schließstellung, weiterbewegt wird

2. Luftströmungsbeeinflussungseinrichtung nach Anspruch 1,
**dadurch gekennzeichnet, daß** die Führungsmittel (19) zum selbsttätigen Öffnen oder Schließen des blendenförmigen Verschlußteiles (17) aus einem mit einem als Verstellrad (22) ausgebildeten Bedienelement (18) zur Verstellung des Verschlußelementes (17) auf eine Drehachse (23) zusammenwirkenden ersten Zahnsegment (24) bestehen, und aus einem mit dem ersten Zahnsegment (24) in Eingriff stehenden zweiten Zahnsegement (25), das mit dem ersten Zahnsegment (24) mit einer Schenkelfeder (26) in Wirkverbindung steht, derart, daß sich die Schenkelfeder (26) zu jeder Seite des Eingriffsscheitelpunktes hin entspannt.

3. Luftströmungsbeeinflussungseinrichtung nach Anspruch 2, **dadurch gekennzeichnet, daß** das zweite Zahnsegment (25) mit seinem nicht mit dem ersten Zahnsegment (24) in Eingriff stehenden Zahnbereich mit einer als Zahnrad ausgebildeten Bremse (29) zusammenwirkt.

4. Luftströmungsbeeinflussungseinrichtung nach Anspruch 3, **dadurch gekennzeichnet, daß** die mit dem zweiten Zahnsegment (25) zusammenwirkende Bremse (29) als Silikonbremse ausgebildet ist.

5. Luftströmungsbeeinflussungseinrichtung nach einem der Ansprüche 2 bis 4, **dadurch gekennzeichnet, daß** das Verstellrad (22) einen ersten Anschlag (30) für die Festlegung des Öffnungszustandes des Luftausströmers (14) und einen zweiten Anschlag (31) für die Festlegung der Schließstellung des Luftausströmers (14) aufweist.

6. Luftströmungsbeeinflussungseinrichtung nach einem der Ansprüche 2 bis 5, **dadurch gekennzeichnet, daß** zur Übertragung der Drehbewegung auf das Gehäuse (13) am zweiten Zahnsegment (25) ein Mitnehmer zum Eingriff in eine an dem Gehäuse (13) ausgebildete Führungsbahn ausgebildet ist.

7. Luftströmungsbeeinflussungseinrichtung nach einem der Ansprüche 2 bis 5, **dadurch gekennzeichnet, daß** zur Übertragung der Drehbewegung auf das Gehäuse (13) am zweiten Zahnsegment (25) ein weiteres Zahnsegment (35) zum Eingriff mit einem auf der Drehachse des Gehäuses (13) angeordneten weiteren Zahnsegment (36) angeordnet ist.

8. Luftströmungsbeeinflussungseinrichtung nach einem der Ansprüche 1 bis 7, **dadurch gekennzeichnet, daß** an der Verbindungsstelle (32) zwischen dem Gehäuse (11) der Luftströmungsbeeinflussungseinrichtung (10) und dem Verschlußteil (17) an wenigstens einem dieser beiden Teile ein Dichtelement (33) vorgesehen ist, das in der Schließstellung des Luftausströmers (14) von dem Verschlußteil (17) beaufschlagbar ist.

9. Luftströmungsbeeinflussungseinrichtung nach einem der Ansprüche 1 bis 8, **dadurch gekennzeichnet, daß** dem in dem Gehäuse (13) befindlichen Luftausströmer (14) ein Stellantrieb zugeordnet ist.

10. Luftströmungsbeeinflussungseinrichtung nach Anspruch 9, **dadurch gekennzeichnet, daß** der Stellantrieb elektromotorisch betrieben ausgebildet ist.

11. Luftströmungsbeeinflussungseinrichtung nach Anspruch 9, **dadurch gekennzeichnet, daß** der Stellantrieb luftstrombetätigt ausgebildet ist.

12. Luftströmungsbeeinflussungseinrichtung nach Anspruch 9, **dadurch gekennzeichnet, daß** der Stellantrieb als pneumatischer Stellmotor ausgebildet ist.

13. Luftströmungsbeeinflussungseinrichtung nach einem der Ansprüche 1 bis 12, **dadurch gekennzeichnet, daß** die Luftleitelemente (15, 16) zur horizontalen und vertikalen Umlenkung des Luftstromes ausgebildet sind.

14. Luftströmungsbeeinflussungseinrichtung nach einem der Ansprüche 1 bis 13, **dadurch gekennzeichnet, daß** eine hintere Luftstromklappe (20) und Mittel (21) zur Regulierung derselben vorgesehen sind und die Mittel (21) zur Regulierung der hinteren Luftstromklappe (20) durch eine am Gehäuse (11) drehbar gelagerte, in einer an einem Verstellrad (22) befindlichen Führungsbahn (27) ablaufende, mit der hinteren Luftstromklappe (20) in Wirkverbindung stehende Hebeleinrichtung (28) gebildet sind.

15. Luftströmungsbeeinflussungseinrichtung nach Anspruch 14, **dadurch gekennzeichnet, daß** die an dem Verstellrad (22) befindliche Führungsbahn (27) für die Hebeleinrichtung (28) im wesentlichen viertelkreisförmig ausgebildet ist.

## Claims

1. Air flow control unit (10), in particular for use in motor vehicles, with an air discharge vent (14) which is located in a housing (13) mounted rotatably in a recess (12) of a housing (11) of the air flow control unit (10) and has functional elements, comprising at least one air-guiding element (15, 16), at least one closure part (17) which at least partially prevents or redirects the air flow and has an operating element (18) for adjusting the closure part (17), wherein the closure part (17) is designed as a rotatable shutter-type part, with guide means (19) which are movable in order to be able to adjust the closure part (17), **characterized in that** the guide means (19) are designed for automatically opening or closing the shutter-type closure part (17) in such a manner that, after an initial movement is initiated, the closure part (17) is automatically moved on into its particular end position, i.e. open position or closed position.

2. Air flow control unit according to Claim 1, **characterized in that** the guide means (19) for automatically opening or closing the shutter-type closure part (17) comprise a first toothed quadrant (24) which interacts with an operating element (18), which is designed as an adjusting wheel (22), in order to adjust the closure element (17) on an axis of rotation (23), and comprise a second toothed quadrant (25) which is in engagement with the first toothed quadrant (24) and is operatively connected to the first toothed quadrant (24) by a leg spring (26) in such a manner that the leg spring (26) slackens towards each side of the engagement apex point.

3. Air flow control unit according to Claim 2, **characterized in that** the second toothed quadrant (25) interacts by means of its toothed region which is not in engagement with the first toothed quadrant (24) with a brake (29) which is designed as a toothed wheel.

4. Air flow control unit according to Claim 3, **characterized in that** the brake (29) which interacts with the second toothed quadrant (25) is designed as a silicone brake.

5. Air flow control unit according to one of Claims 2 to 4, **characterized in that** the adjusting wheel (22) has a first stop (30) for defining the opening state of the air discharge vent (14) and a second stop (31) for defining the closed position of the air discharge vent (14).

6. Air flow control unit according to one of Claims 2 to 5, **characterized in that,** in order to transmit the rotational movement to the housing (13), a driver for engagement in a guide track formed on the housing (13) is formed on the second toothed quadrant (25).

7. Air flow control unit according to one of Claims 2 to 5, **characterized in that,** in order to transmit the rotational movement to the housing (13), a further toothed quadrant (35) for engagement with a further toothed quadrant (36) arranged on the axis of rotation of the housing (13) is arranged on the second toothed quadrant (25).

8. Air flow control unit according to one of Claims 1 to 7, **characterized in that,** at the connecting point (32) between the housing (11) of the air flow control unit (10) and the closure part (17), a sealing element (33) is provided on at least one of these two parts, said sealing element being acted upon by the closure part (17) in the closed position of the air discharge vent (14).

9. Air flow control unit according to one of Claims 1 to 8, **characterized in that** the air discharge vent (14) which is located in the housing (13) is assigned an actuating drive.

10. Air flow control unit according to Claim 9, **characterized in that** the actuating drive is designed such that it is operated by electric motor.

11. Air flow control unit according to Claim 9, **characterized in that** the actuating drive is designed such that it is actuated by an air flow.

12. Air flow control unit according to Claim 9, **characterized in that** the actuating drive is designed as a pneumatic servomotor.

13. Air flow control unit according to one of Claims 1 to 12, **characterized in that** the air-guiding elements (15, 16) are designed to horizontally and vertically deflect the air flow.

14. Air flow control unit according to one of Claims 1 to 13, **characterized in that** a rear air flow flap (20) and means (21) for regulating the same are provided, and the means (21) for regulating the rear air flow flap (20) are formed by a lever device (28) which is mounted rotatably on the housing (11), runs in a guide track (27) located on an adjusting wheel (22) and is operatively connected to the rear air flow flap (20).

15. Air flow control unit according to Claim 14, **characterized in that** the guide track (27) which is located on the adjusting wheel (22) and is intended for the lever device (28) is of substantially quarter-circle-shaped design.

## Revendications

1. Dispositif de commande de flux d'air (10), en particulier pour l'utilisation dans des véhicules automobiles, comprenant un diffuseur d'air (14) se trouvant dans un boîtier (13) monté de manière à pouvoir tourner dans un évidement (12) d'un boîtier (11) du dispositif de commande de flux d'air (10), avec des éléments fonctionnels, comprenant au moins un élément de guidage d'air (15, 16), au moins une partie de fermeture (17) déviant ou supprimant au moins partiellement le flux d'air, avec un élément de commande (18) pour le réglage de la partie de fermeture (17), la partie de fermeture (17) étant réalisée sous forme de partie en forme de diaphragme rotative, avec des moyens de guidage (19) mobiles pour permettre un réglage de la partie de fermeture (17),
**caractérisé en ce que**
les moyens de guidage (19) sont réalisés de manière à ouvrir ou fermer automatiquement la partie de fermeture (17) en forme de diaphragme de telle sorte que la partie de fermeture (17) soit déplacée davantage après un mouvement initial amorcé, automatiquement dans sa position finale respective, c'est-à-dire une position d'ouverture ou une position de fermeture.

2. Dispositif de commande de flux d'air selon la revendication 1,
**caractérisé en ce que** les moyens de guidage (19) pour l'ouverture ou la fermeture automatique de la partie de fermeture (17) en forme de diaphragme se composent d'un premier segment denté (24) coopérant avec un élément de commande (18) sous forme de roue de réglage (22) pour le réglage de l'élément de fermeture (17) sur un axe de rotation (23), et d'un deuxième segment denté (25) en prise avec le premier segment denté (24), qui est en liaison fonctionnelle avec le premier segment denté (24) par un ressort à branches (26), de telle sorte que le ressort à branches (26) se détende dans la direction de chaque côté du sommet d'engagement.

3. Dispositif de commande de flux d'air selon la revendication 2, **caractérisé en ce que** le deuxième segment denté (25) coopère, par sa région dentée non en prise avec le premier segment denté (24), avec un frein (29) réalisé sous forme de roue dentée.

4. Dispositif de commande de flux d'air selon la revendication 3, **caractérisé en ce que** le frein (29) coopérant avec le deuxième segment denté (25) est réalisé sous forme de frein en silicone.

5. Dispositif de commande de flux d'air selon l'une quelconque des revendications 2 à 4, **caractérisé en ce que** la roue de réglage (22) présente une première butée (30) pour définir l'état d'ouverture du diffuseur d'air (14) et une deuxième butée (31) pour définir la position de fermeture du diffuseur d'air (14).

6. Dispositif de commande de flux d'air selon l'une quelconque des revendications 2 à 5, **caractérisé en ce que** pour le transfert du mouvement de rotation au boîtier (13) au niveau du deuxième segment denté (25), un dispositif d'entraînement est réalisé pour venir en prise dans une piste de guidage réalisée sur le boîtier (13).

7. Dispositif de commande de flux d'air selon l'une quelconque des revendications 2 à 5, **caractérisé en ce que** pour le transfert du mouvement de rotation au boîtier (13) au niveau du deuxième segment denté (25), un autre segment denté (35) est disposé de manière à venir en prise avec un autre segment denté (36) disposé sur l'axe de rotation du boîtier (13).

8. Dispositif de commande de flux d'air selon l'une quelconque des revendications 1 à 7, **caractérisé en ce qu'**au niveau du point de connexion (32) entre le boîtier (11) du dispositif de commande de flux d'air (10) et la partie de fermeture (17) on prévoit sur au moins l'une de ces deux pièces un élément d'étanchéité (33), qui peut être sollicité dans la position de fermeture du diffuseur d'air (14) par la partie de fermeture (17).

9. Dispositif de commande de flux d'air selon l'une quelconque des revendications 1 à 8, **caractérisé en ce que** l'on associe au diffuseur d'air (14) se trouvant dans le boîtier (13) un entraînement de commande.

10. Dispositif de commande de flux d'air selon la revendication 9, **caractérisé en ce que** l'entraînement de commande est réalisé de manière à pouvoir être entraîné par un moteur électrique.

11. Dispositif de commande de flux d'air selon la revendication 9, **caractérisé en ce que** l'entraînement de commande est réalisé de manière à pouvoir être actionné par un flux d'air.

12. Dispositif de commande de flux d'air selon la revendication 9, **caractérisé en ce que** l'entraînement de commande est réalisé sous forme de moteur de commande pneumatique.

13. Dispositif de commande de flux d'air selon l'une quelconque des revendications 1 à 12, **caractérisé en ce que** les éléments de guidage d'air (15, 16) sont réalisés de manière à dévier horizontalement et verticalement le flux d'air.

14. Dispositif de commande de flux d'air selon l'une quelconque des revendications 1 à 13, **caractérisé en ce qu'**un clapet de flux d'air arrière (20) et des moyens (21) pour réguler ce dernier sont prévus et **en ce que** les moyens (21) pour réguler le clapet de flux d'air arrière (20) sont formés par un dispositif de levier (28) monté à rotation sur le boîtier (11), se terminant dans une piste de guidage (27) située sur une roue de réglage (22) et étant en liaison fonctionnelle avec le clapet de flux d'air arrière (20).

15. Dispositif de commande de flux d'air selon la revendication 14, **caractérisé en ce que** la piste de guidage (27) pour le dispositif de levier (28), située sur la roue de réglage (22), est réalisée essentiellement en forme de quart de cercle.
